# EUROPÄISCHE PATENTANMELDUNG

(11) **EP 0 747 531 A2**
(43) Veröffentlichungstag der Anmeldung: **11.12.1996**
(21) Anmeldenummer: 96108630.3
(22) Anmeldetag: 30.05.1996
(51) Int. Cl.: D21H 17/72, C08L 61/28, D21H 17/51, D21H 17/55

(54) **Harzmischungen für die Imprägnierung von Papier**

(30) Priorität: 09.06.1995 DE 19521032
(71) Anmelder: BASF Aktiengesellschaft, 67063 Ludwigshafen (DE)
(72) Erfinder: Utecht, Jens, Dr., 68809 Neulussheim (DE); Niessner, Manfred, Dr., 67105 Schifferstadt (DE); Kirchgässner, Uwe, Dr., 67227 Frankenthal (DE); Wittmann, Otto, 67227 Frankenthal (DE); Decher, Jakob, 67240 Bobenheim-Roxheim (DE); Jäckh, Christof, Dr., 69120 Heidelberg (DE)

(57) **Zusammenfassung**

Harzmischungen, die zur Imprägnierung von Papier geeignet sind, enthaltend
a) 80 bis 99 Gew.-% eines Melaminharzes Komponente (a) und
b) 1 bis 20 Gew.-% eines mit Poly(C₂- bis C₄-alkylenoxid)-Gruppen N-substituierten C₃- bis C₂₀-Lactams.

## Beschreibung

Die vorliegende Erfindung betrifft Harzmischungen, die zur Imprägnierung von Papier geeignet sind, enthaltend
a) 80 bis 99 Gew.-% eines Melaminharzes Komponente (a) und
b) 1 bis 20 Gew.-% eines mit Poly(C₂- bis C₄-alkylenoxid)-Gruppen N-substituierten C₃- bis C₂₀-Lactams.

Weiterhin betrifft die Erfindung deren Verwendung zur Imprägnierung von Papieren, Imprägnate, die unter Verwendung der Harzmischungen hergestellt worden sind, sowie mit diesen Imprägnaten beschichtete Werkstoffe.

Melaminharze aus Melamin und Formaldehyd sind allgemein bekannt, beispielsweise aus Kunststoff-Handbuch, 2. Auflage, 1988, Band 10, S. 41 bis 49.

Sie werden hauptsächlich zur Herstellung von Melaminharz-Imprägnaten eingesetzt. Dabei geht man üblicherweise so vor, daß man Papiere mit einer wässerigen Lösung eines Melaminharzes imprägniert und das imprägnierte Papier anschließend trocknet.

Diese Melaminharz-Imprägnate werden vor allem in der Möbelindustrie zur Oberflächenvergütung von Holzwerkstoffen wie Span-, Hartfaser- und Tischlerplatten eingesetzt. Die Beschichtung der Holzwerkstoffe mit diesen Imprägnaten erfolgt im allgemeinen, indem man sie mit einem geeigneten Klebstoff, z.B. einem Holzleim, auf den Holzwerkstoff klebt oder gegebenenfalls unter Anwendung von Hitze auf den Holzwerkstoff preßt.

An die Verarbeitungseigenschaften der Melaminharze und die Gebrauchseigenschaften der aus ihnen hergestellten Melaminharz-Imprägnate bzw. der mit ihnen beschichteten Holzwerkstoffe werden vielfältige Anforderungen gestellt.

Wässerige Lösungen der Melaminharze sollen eine geringe Viskosität und gleichzeitig einen möglichst hohen Feststoffgehalt aufweisen, damit sie in das mit ihnen benetzte Papier rasch und gleichmäßig eindiffundieren und beim anschließenden Trocknungsprozeß möglichst wenig Energie benötigt wird.

Die mit den Imprägnaten beschichteten Holzwerkstoffe sollen eine geringe Anschmutzbarkeit aufweisen, d.h. daß sich Schmutz von der Oberfläche, ohne Rückstände zu hinterlassen, leicht entfernen lassen soll. Hierzu ist es erforderlich, daß die Oberfläche der Imprägnate möglichst wenig Fehlstellen wie Risse oder Poren aufweist, aus denen der Schmutz nur schwer zu entfernen ist.

Weiterhin sollen die aus den Melaminharzen hergestellten Imprägnate eine gewisse Elastizität aufweisen, damit sich auch strukturierte Flächen von Holzwerkstoffteilen beschichten lassen, ohne daß es zu einer Rißbildung in den aufgepreßten Imprägnaten kommt. Außerdem soll die Elastizität groß genug sein, damit Quellungs- und Schwundvorgänge im Holzwerkstoff, wie sie beispielsweise bei der Veränderung des Raumklimas auftreten können, nicht zu einer Oberflächenrißbildung führen.

Daneben ist es erwünscht, daß die beschichteten Holzwerkstoffe durch Feuchtigkeit, Wasserdampf und Chemikalien wie verdünnte Laugen und Säuren sowie organische Lösungsmittel möglichst wenig angegriffen werden. Voraussetzung hierfür ist, daß die Melaminharze bei der Verarbeitung, d.h. beim Trocknen der Imprägnate oder bei der Beschichtung der Holzwerkstoffe zu einem hochmolekularen Netzwerk aushärten.

Aus der US-A 5,306,793 sind Tränkharzlösungen aus einem Melamin/Formaldehyd-Vorkondensat und einem Polyharnstoff bekannt sowie deren Verwendung zur Herstellung von Papier-Imprägnaten. Holzwerkstoffe, die mit diesen Imprägnaten beschichtet sind, lassen jedoch noch im Hinblick auf die gewünschten Gebrauchseigenschaften der beschichteten Holzwerkstoffe zu wünschen übrig, insbesondere was die thermische Beständigkeit betrifft.

Weiterhin ist es aus DE-A-2 609 696 bekannt, Harzmischungen aus Melaminharzen und Polyalkoholen wie Diethylenglycol einzusetzten. Bei ihrer Weiterverarbeitung härten diese Harze oftmals nicht vollständig aus, was dazu führt, daß beschichtete Holzwerkstoffe, die unter Verwendung dieser Harzmischungen hergestellt wurden, noch keine genügend große Widerstandsfähigkeit gegenüber Lösungsmitteln und verdünnten Säuren und Laugen aufweisen.

Die DE-A-26 37 424 beschreibt Tränkharz-Lösungen für Papier-Imprägnate, die man durch Kondensation von Melamin und Formaldehyd im Molverhältnis 1:1,5 bis 1:3,5 erhält, wobei man vor, während und nach der Kondensation 0,5 bis 15 Gew.-% ε-Caprolactam und Thioharnstoff sowie 0,25 bis 0,5 Gew.-% eines Hydrogensulfits oder Sulfits als Modifizierungsmittel zusetzt.

Nachteilig an den in den beiden letztgenannten Schriften beschriebenen Harzmischungen ist zudem, daß diese Modifizierungsmittel bei der Verarbeitung der Harzmischungen, wenn die mit ihnen getränkten Papiere getrocknet und die Holzwerkstoffe mit den Imprägnaten beschichtet werden, insbesondere dann, wenn diese Arbeitsschritte wie üblich bei erhöhter Temperatur durchgeführt werden, sich zum Teil verflüchtigen.

Um aus Gründen des Umweltschutzes und der Arbeitshygiene zu vermeiden, daß diese Stoffe an die Luft abgegeben werden, sind im allgemeinen erhebliche Investitionen in Filter- oder Nachverbrennungsanlagen erforderlich.

Dieses Problem stellt sich mit besonderer Schärfe beim ε-Caprolactam, weil durch deutsche Umwelt- und Arbeitsschutzvorschriften (z.B. Technische Anweisung Luft) der Grenzwert für ε-Caprolactam in der Luft auf 20 mg/m³ (Verbindungen der Schadstoffklasse I) festgelegt wurde.

Aus der nicht vorveröffentlichten deutschen Anmeldung P 44 34 605.0 (O.Z. 0050/45231) sind wässerige Tränkharze, die ein Melaminharz und 0,1 bis 20 Gew.-%, bezogen auf das Melaminharz, eines wasserlöslichen oder wasserdispergierbaren alkoxidierten Polyamids enthalten, bekannt.

Aufgabe der vorliegenden Erfindung war es deshalb, Harzmischungen bereitzustellen, die die Mängel des Standes der Technik nicht aufweisen. Insbesondere sollen bei deren Verwendung zur Beschichtung von Holzwerkstoffen möglichst geringe Mengen an organischen Verbindungen emittiert werden. Außerdem sollen die mit den Harzmischungen hergestellten Beschichtungen elastisch sein und nicht zur Rißbildung neigen.

Demgemäß wurden die eingangs definierten Harzmischungen gefunden.

Sie enthalten 80 bis 99 Gew.-%, bevorzugt 90 bis 98 Gew.-%, besonders bevorzugt 94 bis 96 Gew.-% eines Melaminharzes (Komponente a) und 1 bis 20 Gew.-%, bevorzugt 2 bis 10 Gew.-%, besonders bevorzugt 4 bis 6 Gew.-% eines mit Poly(C₂- bis C₄-alkylenoxid)-Gruppen N-substituierten C₃- bis C₂₀-Lactams, wobei die Gewichts-Prozentangaben jeweils auf die Mischung aus den Komponenten (a) und (b) bezogen sind.

Die Melaminharze (Komponente a) sind allgemein bekannt (vgl. Ullmanns Encyklopädie der technischen Chemie, 4. Auflage, Band 7, S. 403 bis 422 oder Kunststoff-Handbuch, 2. Auflage, 1988, Band 10, S. 41 bis 49.

Als Ausgangsverbindungen zur Herstellung der Komponente (a) werden
a1) Melamin
a2) 1,3 bis 2,5, bevorzugt 1,5 bis 1,6 mol Formaldehyd pro Mol Melamin
a3) 0 bis 0,5, bevorzugt 0,05 bis 0,1 mol eines Guanamins pro Mol Melamin und
a4) 0 bis 0,1, bevorzugt 0,02 bis 0,05 mol Harnstoff pro Mol Melamin
eingesetzt.

Insbesondere werden die Mengen der Komponenten (a1), (a2), (a3) und (a4) so gewählt, daß das Molverhältnis der in den Komponenten (a1), (a3) und (a4) ursprünglich vorhandenen -NH₂-Cruppen zur Komponente (a2) 0,1:1 bis 0,8:1, bevorzugt 0,4:1 bis 0,6:1 beträgt.

Das Melamin (Komponente a1) wird bevorzugt in fester Form eingesetzt.

Der Formaldehyd (Komponente a2) wird bevorzugt in Form einer 30-bis 50-gew.-%igen wässerigen Lösung oder in Form von Paraformaldehyd eingesetzt.

Als Komponente (a3) kommen Guanamine wie Benzoguanamin und Azetoguanamin in Betracht. Bisguanamine wie Adipo-, Glutaro- oder Methylolglutarobisguanamin sowie Verbindungen, welche mehrere, z.B. kondensierte Aminotriazinkerne enthalten, sind ebenfalls geeignet.

Die Komponente (a4) wird bevorzugt in Form einer konzentrierten wässerigen Lösung aus Harnstoff und Formaldehyd (Komponente a2), die aus der DE-A 24 51 990 und der EP-A 0 083 427 bekannt sind, eingesetzt. Diese Lösungen aus 3,0 bis 6,0, bevorzugt 3,5 bis 4,5 mol Formaldehyd pro Mol Harnstoff, haben bevorzugt einen Feststoffgehalt nach DIN 12 605 von 50 bis 85, bevorzugt von 60 bis 80 Gew.-%. Sie enthalten Harnstoff und Formaldehyd teils in freier monomerer Form, teils in Form von Umsetzungsprodukten wie Methylolharnstoffen oder niedermolekularen Kondensationsprodukten.

Die Umsetzung der Ausgangsverbindungen zum Melaminharz erfolgt üblicherweise bei einem pH-Wert von 7 bis 10, bevorzugt von 8,5 bis 9,2 und einer Reaktionstemperatur von 60 bis 110, bevorzugt von 90 bis 100^{o}C. Die Umsetzung kann beendet werden, indem man die Reaktionsmischung auf Temperaturen unterhalb 50^{o}C, bevorzugt auf 20 bis 30^{o}C abkühlt. Es wird im allgemeinen bei Normaldruck gearbeitet.

Zur Herstellung der erfindungsgemäßen Harzmischungen eignen sich besonders wässerige Melaminharze mit einem Feststoffgehalt von 40 bis 70 Gew.-% und einer Viskosität von 50 bis 1000 mPa·s (bezogen auf eine Temperatur von 20^{o}C und einer Schergeschwindigkeit von 100 s⁻¹).

Die mit Poly(C₂- bis C₄-alkylenoxid)-Gruppen N-substituierten C₃-bis C₂₀-Lactame, die in den erfindungsgemäßen Harzmischungen als Komponente (b) enthalten sind, sind z.B. aus der DD-A 219 599 und DD-A 106 400 bekannt.

Als Komponente (b) kommen bevorzugt Verbindungen der allgemeinen Formel I 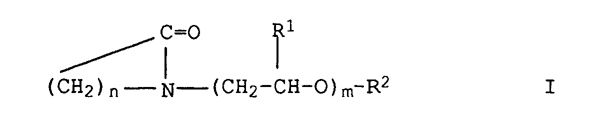 in der
- n: 2 bis 20, bevorzugt 3 bis 10, besonders bevorzugt 4 bis 7
- m: 1 bis 100, bevorzugt 2 bis 20, besonders bevorzugt 4 bis 6
- R¹: Wasserstoff oder Methyl
- R²: Wasserstoff, C₁- bis C₂₀-, bevorzugt C₁- bis C₆-Alkyl, C₅- bis C₂₀-, bevorzugt C₅- oder C₆-Cycloalkyl, C₆- bis C₁₅-Aryl, bevorzugt Phenyl, oder C₆- bis C₂₀-Aralkyl, bevorzugt Benzyl bedeutet.

Geeignete Polyalkylenoxid-Einheiten sind auch solche, die sowohl Einheiten, die sich von Ethylenoxid, als auch Einheiten, die sich von Propylenoxid ableiten, enthalten. Das Verhältnis der von Ethylenoxid abgeleiteten Einheiten zu den von Propylenoxid abgeleiteten Einheiten beträgt bevorzugt 0,1:1 bis 10:1, besonders bevorzugt 0,5:1 bis 1:1.

Dabei können die von Ethylenoxid und Propylenoxid abgeleiteten Einheiten statistisch verteilt oder in Form von Blöcken nebeneinander vorliegen.

Die Komponente (b) ist nach allgemein bekannten Verfahren zur Polyaddition der entsprechenden Monoepoxide oder von Tetrahydrofuran an Carbonsäureamide zugänglich (vgl. "Methoden der organischen Chemie (Houben-Weyl)", 4. Auflage, Georg Thieme Verlag, Stuttgart, 1963, Band XIV/2 Makromolekulare Stoffe, S. 446).

Im allgemeinen nimmt man die Polyaddition in Gegenwart von alkalischen oder sauren Katalysatoren wie Alkoholen oder Bortrifluorid bei Temperaturen von 80 bis 180^{o}C vor.

Die Komponente (b) wird bevorzugt in Form einer wässerigen Dispersion oder wässerigen Lösung mit einem Feststoffgehalt von 20 bis 100 Gew.-%, vorzugsweise von 50 bis 80 Gew.-% zur Herstellung der erfindungsgemäßen Harzmischungen eingesetzt.

Die erfindungsgemäßen Harzmischungen lassen sich auf einfache Weise herstellen, indem man eine wässerige Lösung der Komponente (a) mit einer wässerigen Lösung der Komponente (b) vermischt.

Die Vermischung der beiden Komponenten kann zu einem beliebigen Zeitpunkt nach deren Herstellung erfolgen, also z.B. unmittelbar vor der Verarbeitung der Harzmischungen. Daneben ist es ebenfalls möglich, die Herstellung der Komponente (a) aus den Komponenten (a1) bis (a4) in Gegenwart der Komponente (b) vorzunehmen.

Die Harzmischungen sind sowohl in fester Form, d.h. in Form eines Pulvers, als auch in Form einer wässerigen Lösung, die im allgemeinen einen Feststoffgehalt von 45 bis 65 Gew.-% aufweisen, handelsfähig.

Die pulverförmigen Harzmischungen sind aus den wässerigen Lösungen beispielsweise durch Sprühtrocknung erhältlich.

Die erfindungsgemäßen Harzmischungen eignen sich vor allem zur Herstellung von Papier-Imprägnaten, die zur Beschichtung von Holzwerkstoffen wie Sperrholz, Tischlerplatten, Holzfaserplatten oder Spanplatten verwendet werden.

Es erübrigt sich im allgemeinen, den Harzmischungen vor ihrer Verarbeitung zu Imprägnaten wirksame Mengen bekannter Modifizierungsmittel wie ε-Caprolactam und andere Carbonsäureamide (vgl. deutsche Auslegeschrift 1 595 368), Sulfonsäureamide wie Toluolsulfonsäureamid, Saccharide (DE-A-21 44 534), Polyetheralkohole wie Diethylenglycol sowie Thioharnstoff zuzusetzen.

Lediglich in den Fällen, in denen farbige, insbesondere schwarze Papiere zu Beschichtungen verarbeitet werden sollen und hohe Anforderungen an die Farbbrillanz der Oberfläche der Beschichtungen gestellt werden, kann es sich als vorteilhaft erweisen, einen Teil der Komponente (b) durch ein übliches Elastifizierungsmittel (Komponente c) zu ersetzen, da hierdurch das Auftreten von weißen Ausblühungen, die die Farben der Dekorpapiere grau oder trüb erscheinen lassen, verhindert wird.

Als übliche Elastifizierungsmittel (Komponente c) sind Polyalkylenglycole, z.B. Di- und Triethylenglycol, Polyharnstoff sowie Harnstoff geeignet.

Der Einsatz von wirksamen Mengen ε-Caprolactam erübrigt sich im allgemeinen.

Diese Komponente (c) ist in den Harzmischungen günstigerweise in Mengen von 1 bis 10 Gew.-%, bevorzugt 2 bis 4 Gew.-%, bezogen auf die Komponente (b), enthalten.

Die Herstellung der Imprägnate und der damit beschichteten Holzwerkstoffe kann nach den allgemein bekannten Methoden erfolgen.

Hierzu werden üblicherweise Papiere, sogenannte Tränkpapiere, z.B. Dekor- oder Kernlagenpapiere (Natronkraftpapiere), mit den Harzmischungen imprägniert.

Dabei kommen die Harzmischungen günstigerweise in Form einer 40-bis 70-gew.-%igen wässerigen Lösung zur Anwendung, der üblicherweise ein Härter zugesetzt wird.

Als Härter kommen BrØnstedt-Säuren wie organische Sulfon- und Carbonsäuren sowie deren Anhydride, z.B. Maleinsäure, Maleinsäureanhydrid und Ameisensäure, Ammoniumverbindungen, z.B. Ammoniumsulfat, Ammoniumsulfit, Ammoniumnitrat, Ethanolaminhydrochlorid, Dimethylethanolammoniumsulfit sowie Härterkombinationen wie Morpholin/p-Toluolsulfonsäure in Betracht.

Die Härter können in Mengen von 0,1 bis 2,5 Gew.-%, bezogen auf die wässerige Harzmischung, zugegeben werden. Dem Fachmann ist bekannt, daß die Härterdosierung den jeweiligen anwendungstechnischen Erfordernissen angepaßt werden kann, wobei die Reaktivität der Tränkharz/Härter-Gemische z.B. über die Messung der Trübungszeiten und Gelierzeiten entsprechend eingestellt werden kann.

Den Imprägnierflotten können zusätzlich Hilfsmittel wie Netzmittel zugesetzt werden. Als Netzmittel eignen sich z.B. ethoxylierte Fettalkohol oder Alkylphenolethoxylate, die in Mengen von 0,2 bis 0,6 Gew.-%, bezogen auf die Harzlösung, zugesetzt werden können.

Verfahren, wie die Imprägnierflotten zu Melaminharz-Imprägnaten, die aus mehreren übereinanderliegenden Papieren aufgebaut sind, z.B. Hochdruck-Laminaten (HPL) und kontinuierlich hergestellten Laminaten (CPL) weiterverarbeitet werden können, sind beispielsweise in der DE-A-41 39 961 und der DE-A-42 40 982 beschrieben.

Diese Laminate werden üblicherweise mit Klebstoffen auf Holzwerkstoffe aufgeleimt.

Die Harzmischungen eignen sich auch für die Herstellung von Holzwerkstoffen, die mit aus einer Papierlage bestehenden Imprägnaten beschichtet sind.

Die Herstellung dieser Oberflächenbeschichtung erfolgt üblicherweise nach dem unter dem Namen Kurztaktverfahren bekannten Verfahren: Dekorpapiere mit Flächengewichten im Bereich von 60 bis 150 g/m² werden mit 120 bis 150 Gew.-%, bezogen auf das Papiergewicht der Imprägnierflotte, bei Raumtemperatur imprägniert. Das imprägnierte Papier wird anschließend bis auf einen Restfeuchtegehalt von ca. 5 bis 7 Gew.-% getrocknet. Die auf diese Weise hergestellten Imprägnate werden anschließend nach dem Kurztaktverfahren bei Temperaturen von 150 bis 210^{o}C und Drücken von 15 bis 30 bar während einer Preßzeit von 8 bis 60 s mit dem Holzwerkstoff verpreßt.

Die erfindungsgemäßen Harzmischungen zeichnen sich insbesondere dadurch aus, daß mit ihnen Imprägnate herstellbar sind, mit denen sich unterschiedliche Materialien wie Holz, Kunststoffe, Faserverbundstoffe und insbesondere Holzwerkstoffe beschichten lassen, so daß diese Materialien eine Oberfläche erhalten, die rißbeständig, glänzend, unempfindlich gegen Verschmutzung, Chemikalien sowie Wasserdampf ist.

Um Beschichtungen mit einem vergleichbaren Eigenschaftsprofil zu erhalten, muß beim Einsatz von Harzmischungen des Standes der Technik bei der Imprägnierung und der Beschichtung der Werkstoffe eine größere Emission von organischen Verbindungen in Kauf genommen werden als beim Einsatz der erfindungsgemäßen Harzmischungen.

### Beispiele

### A. Herstellung der Harzmischungen

### Alkoxyliertes Caprolactam 1

Eine Mischung aus 230 g (2 mol) ε-Caprolactam und 4,6 g Kalium-tert.-Butylat wurden bei einer Temperatur von 110^{o}C portionsweise mit insgesamt 352 g (8 mol) Ethylenoxid versetzt und anschließend 3 Stunden bei dieser Temperatur umgesetzt. Das Reaktionsprodukt wurde anschließend mit Wasser auf eine 50-gew.-%ige wässerige Lösung verdünnt. Der Dampfdruck des wasserfreien alkoxylierten Caprolactams 1 betrug 2,5 mbar bei 160^{o}C. Im Vergleich dazu betrug der entsprechende Dampfdruck von ε-Caprolactam 11,8 mbar.

### Alkoxyliertes Caprolactam 2

Gemäß Alkoxylierungsbeispiel 1 wurden anstatt 352 g Ethylenoxid 464 g (8 mol) Propylenoxid umgesetzt.

### Beispiel 1

Zu einer Mischung aus 1137 g einer 40-gew.-%igen wässerigen Formaldehyd-Lösung (entspricht 15,2 mol Formaldehyd), 537 g entiontem Wasser und 232 g des alkoxylierten Caprolactams 1, die mit 2 n Natronlauge auf einen pH von 9 eingestellt worden war, wurde bei einer Temperatur von 30^{o}C 1232 g (9,8 mol) Melamin gegeben. Die Mischung wurde 150 Minuten bei einem pH-Wert von 8,7 bis 8,9 und einer Temperatur von 98 bis 100^{o}C gerührt, wonach sich eine klare Lösung mit einer Trübungstemperatur von 50^{o}C gebildet hatte.
- Viskosität:: 100 mPa·s
- Feststoffgehalt:: 58,7 %

### Beispiel 2

Es wurde analog zu Beispiel 1 vorgegangen, jedoch wurden 175 g des alkoxylierten Caprolactams 1 eingesetzt.

### Beispiel 3

Es wurde analog zu Beispiel 1 vorgegangen, jedoch wurden 233 g des alkoxylierten ε-Caprolactams 1 eingesetzt.
- Viskosität:: 120 mPa·s
- Feststoffgehalt:: 58,8 %

- Viskosität:: 110 mPa·s
- Feststoffgehalt:: 59,0 %

### Beispiel 4

Es wurde analog zu Beispiel 1 vorgegangen, jedoch wurden 116 g des alkoxylierten ε-Caprolactams 1 und 58,2 g Harnstoff sowie 58,2 g Diethylenglykol eingesetzt.
- Viskosität:: 52 mPa·s
- Feststoffgehalt:: 56,8 %

### Vergleichsbeispiele

### Vergleichsbeispiel 1

Es wurde analog zu Beispiel 1 vorgegangen, jedoch wurde kein alkoxyliertes ε-Caprolactams eingesetzt.
- Viskosität:: 100 mPa·s
- Feststoffgehalt:: 58,3 %

### Vergleichsbeispiel 2

Es wurde analog zu Beispiel 1 verfahren, aber anstatt des alkoxylierten ε-Caprolactams 1 wurden 109 g Caprolactam und 109 g Diethylenglykol eingesetzt.
- Viskosität:: 90 mPa·s
- Feststoffgehalt:: 60,2 %

### Vergleichsbeispiel 3

Es wurde analog zu Beispiel 1 verfahren, aber anstatt des alkoxylierten ε-Caprolactams 1 wurde 109 g Diethylenglykol eingesetzt.
- Viskosität:: 100 mPa·s
- Feststoffgehalt:: 60,8 %

### B. Herstellung der Oberflächenbeschichtungen

Zur Imprägnierung des Papiers (Natronkraftpapier weiß, 80 g/m²) wurde die jeweilige Harzmischung durch Zugabe von Wasser auf einen Feststoffgehalt von 56 % eingestellt, mit 0,3 % eines alkoxylierten Alkylphenols (Kauropal® 930/931) versetzt und durch Zugabe eines üblichen Härters die gewünschte Trübungszeit von 4 oder 5 Minuten eingestellt. Im Rahmen dieser Untersuchungen wurde als Härter eine Mischung aus N-Methylethanolamin, Ethanolamin und SO₂ oder p-Toluol-sulfonsäure verwendet. Das imprägnierte Papier wurde dann auf eine Restfeuchte von ca. 6 % getrocknet und direkt mit der Spanplatte als Träger verpreßt. Es wurden zwei unterschiedliche Preßbedingungen gewählt: 12 sec.; 230^{o}C; 20 kg/cm² oder 35 sec.; 190^{o}C; 20 kg/cm².

### C. Anwendungstechnische Prüfungen

| | Bsp. 1 | Bsp. 2 | Bsp. 3 | Bsp. 4 |
|---|---|---|---|---|
| Härtung | 1,5 | 0,5 | 1 | 0,5 |
| Geschlossenheit | 2,5 | 1,5 | 0,5 | 0,5 |
| Glanz | 19,5 | 31,5 | 18 | 50 |
| Rißstabilität | 0 | 0 | 0 | 0 |
| Vergrauung | 1 | 1,5 | 3 | 0 |

| | Vergl.-Bsp. 1 | Vergl.-Bsp. 2 | Vergl.-Bsp. 3 |
|---|---|---|---|
| Härtung | 2 | 1 | 2 |
| Geschlossenheit | 3,5 | 2,5 | 2,5 |
| Glanz | 27 | 26,4 | 24 |
| Rißstabilität | 6 | 0 | 0 |
| Vergrauung | 0 | 2,5 | 2,5 |

Die in der Tabelle beschriebenen Eigenschaften wurden mit den folgenden Prüfmethoden ermittelt:

### Rißstabilität

Zwei harzimprägnierte Papierfilme wurden bei 170^{o}C innerhalb von 6 Minuten unter Rückkühlung auf eine Spanplatte aufgepreßt. Die so beschichtete Oberfläche wurde bei 80^{o}C 12 Stunden getempert und danach auf Rißbildung geprüft. Die Oberfläche wurde dann mehrmals an unterschiedlichen Stellen angebohrt, nochmals bei 80^{o}C 12 Stunden getempert und dann auf Bohrlochrisse überprüft. Die Beurteilung erfolgte nach einer Skala von 0 bis 6.
- 0: keine Risse
- 1: vereinzelte Risse
- 2: wenige Risse
- 3: mäßige Risse
- 4: häufige Risse
- 5: viele Risse
- 6: totale Rißbildung

### Härtung

Es wurde die Resistenz der Oberfläche gegen 0,004 % Rhodamin B in 0,2 n HCl getestet:

Drei zusammenhängende Gläschen wurden mit den angegebenen Reagenzien ca. 2/3 gefüllt und mit der Öffnung auf die zu untersuchende Fläche gestellt. Die Chemikalien blieben ca. 16 Stunden auf der Oberfläche und wurden dann abgewaschen. Der Angriff der Chemikalien auf die Oberfläche wurde in einer Skala von 0 bis 6 eingestuft.
- 0: kein Angriff
- 1: schwache Anfärung
- 2: deutliche Anfärbung
- 3: starke Anfärung
- 4: starke Anfärbung mit leichter Quellung
- 5: starke Anfärbung mit starker Quellung
- 6: aufgeweichte Fläche

### Geschlossenheit

Zur Bestimmung Schmutzempfindlichkeit wurde auf die Oberfläche schwarze Schuhcreme gerieben und mit Putzwolle wieder entfernt. An offenen Stellen in der Oberfläche blieb schwarze Schuhcreme zurück. Je nach Grad der offenen Stellen wurde die Geschlossenheit nach einer Skala von 0 bis 6 beurteilt.
- 0: porenfrei
- 1: vereinzelte Poren
- 2: wenige Poren
- 3: vereinzelte offene Stellen
- 4: viele offene Stellen
- 5: sehr viele offene Stellen
- 6: keine Geschlossenheit

### Glanzgrad

Es wurde ein Glanzprüfgerät des Typs Single Gloss, Modell 4030, verwendet. Nach DIN 67 530 sind für das Reflektometer drei verschiedene Einstrahlwinkel festgelegt:
20^{o} für hochglänzende Prüfkörper
60^{o} für mittelgänzende Prüfkörper
85^{o} für matte Prüfkörper
Zur Eichung des Gerätes wurde der Meßkopf auf den Standard gestellt und durch Justieren des Potentiometers in Übereinstimmung mit dem entsprechenden Sollwert des Standards gebracht. Der Wert für die zu prüfende Fläche wurde direkt in % abgelesen, wobei 100 % vollständiger Reflektion entspricht.

### Vergrauung

Zur Prüfung auf Vergrauung der Oberflächen wurde schwarzes Dekorpapier (Natronkraftpapier, 80 g/m²) imprägniert und auf Spanplatten als Träger verpreßt. Der Grad an weißen Ausblühungen (Vergrauung) wurde nach einer Skala von 0 bis 6 beurteilt.
- 0: vergrauungsfrei
- 1: sehr wenige weiße Stellen
- 2: vereinzelte weiße Stellen
- 3: wenige weiße Stellen
- 4: viele weiße Stellen
- 5: sehr viele weiße Stellen
- 6: völlige Vergrauung.

## Patentansprüche

1. Harzmischungen, die zur Imprägnierung von Papier geeignet sind, enthaltend
a) 80 bis 99 Gew.-% eines Melaminharzes (Komponente a) und
b) 1 bis 20 Gew.-% eines mit Poly(C₂- bis C₄-alkylenoxid)-Gruppen N-substituierten C₂- bis C₂₀-Lactams (Komponente b).

2. Harzmischungen nach Anspruch 1, wobei es sich bei der Komponente (a) um ein Melaminharz aus
a1) Melamin
a2) 1,3 bis 2,5 mol Formaldehyd pro Mol Melamin
a3) 0 bis 0,5 mol eines Guanamins pro Mol Melamin und
a4) 0 bis 0,1 mol Harnstoff pro Mol Melamin
handelt.

3. Harzmischungen nach Anspruch 1 oder 2, wobei es sich bei der Komponente (b) um eine Verbindung der allgemeinen Formel I 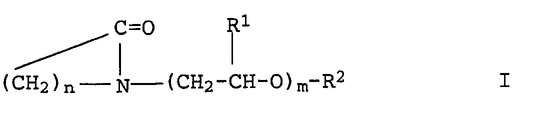 in der
n 2 bis 20,
m 1 bis 100,
R¹ unabhängig voneinander Wasserstoff oder Methyl,
R² Wasserstoff, C₁- bis C₂₀-Alkyl, C₅- bis C₂₀-Cycloalkyl, C₆- bis C₁₅-Aryl oder C₆- bis C₂₀-Aralkyl bedeutet,
handelt.

4. Harzmischungen nach Anspruch 3, wobei n 5 bedeutet.

5. Harzmischungen nach den Ansprüchen 1 bis 4, enthaltend c) 10 bis 200 Gew.-%, bezogen auf die Komponente (b), eines weiteren üblichen Elastifizierungsmittels (Komponente c).

6. Harzmischungen nach Anspruch 5, wobei es sich bei der Komponente (c) um Diethylenglycol und/oder Harnstoff handelt.

7. Harzmischungen nach den Ansprüchen 1 bis 6, enthaltend, bezogen auf die Komponenten (a) und (b), 25 bis 250 Gew.-% Wasser.

8. Verwendung der Harzmischungen gemäß den Ansprüchen 1 bis 7 zur Imprägnierung von Papier.

9. Imprägnate, die mit den Harzmischungen gemäß Anspruch 1 bis 7 getränkt sind.

10. Werkstoffe, die mit den Imprägnaten nach Anspruch 9 beschichtet sind.
